# EUROPEAN PATENT APPLICATION

(11) **EP 1 710 920 A1**
(43) Date of publication of application: **11.10.2006**
(21) Application number: 05388032.4
(22) Date of filing: 06.04.2005
(51) Int. Cl.: H04B 1/10

(54) **Receiving modulated radio signals**

(71) Applicant: TELEFONAKTIEBOLAGET LM ERICSSON (publ), 164 83 Stockholm (SE)
(72) Inventor: Nilsson, Magnus, 224 72 Lund (SE)
(74) Representative: Boesen, Johnny Peder

(57) **Abstract**

Modulated radio signals received in at least one frequency band in a receiver are amplified in a low noise amplifier (14), down-converted in a mixer (18) and then filtered in a filter (20; 21) to reduce signals outside the frequency band. A signal level is detected at a point upstream of said filter (20; 21); and if the detected signal level indicates that the signal received at the input terminal (37) exceeds a preset level, the signal input to at least one of said low noise amplifier (14) and said mixer (18) is attenuated to prevent saturation of at least one of said low noise amplifier (14) and said mixer (18). In this way the use of SAW filters is avoided in the receiver, and the complexity and the cost of the receiver are reduced, while strong out-of-band blocking signals can still be handled without saturation of the receiver.

## Description

### Technical Field of the Invention

The invention relates to a method of receiving modulated radio signals in at least one frequency band in a receiver, wherein a signal received at an input terminal of said receiver is amplified in a low noise amplifier, down-converted in a mixer and then filtered in a filter to reduce signals outside said at least one frequency band. The invention also relates to a receiver for receiving modulated radio signals in at least one frequency band.

### Description of Related Art

Many radio receivers, such as those used in mobile terminals for cellular telephone networks, e.g. Global System for Mobile Communications (GSM), Code Division Multiple Access (CDMA) or Wideband Code Division Multiple Access (WCDMA) networks, are highly integrated in order to achieve low product costs and a small size of the mobile terminal. Such receivers are often implemented as low or zero intermediate frequency receivers, due to the lower component count of these receiver architectures compared to the conventional superheterodyne receiver. Zero intermediate frequency receivers are also known as homodyne or direct conversion receivers. With these receiver types it is often possible to integrate a considerable part of a receiver on a single Radio Frequency Application Specific Integrated Circuit (RF-ASIC). Examples of such receivers are known from "A Fully Integrated Zero-IF Transceiver for GSM-GPRS Quad-Band Application", IEEE Journal of Solid-State Circuits, Vol. 38, No. 12, December 2003, pages 2249-2255 and "A CDMA2000 Zero-IF Receiver with Low-Leakage Integrated Front-End", IEEE Journal of Solid-State Circuits, Vol. 39, No. 7, July 2004, pages 1175-1179.

These mobile receivers often have to be designed to receive a number of different frequency bands. As an example, a GSM receiver can be required to receive the GSM 850, GSM 900, DCS 1800 and PCS 1900 bands. Typically, several components have to be duplicated for each band. Thus even with the low or zero intermediate frequency receivers there is a need to reduce the number of components further, especially the number of external components that cannot be integrated on the ASIC, since such components increase the space requirement and the cost of the receiver.

One type of external component that is normally needed for each frequency band is a Surface Acoustic Wave (SAW) filter. The SAW filter is a band pass filter that is required to attenuate strong out-of-band blocking signals and which cannot be integrated on the ASIC. A strong out-of-band blocking signal is an unwanted and disturbing signal having a frequency outside the received frequency band, but with an amplitude that may be considerably higher than that of the received signal. Since the receiver must have a certain sensitivity, and the linear range of the receiver necessarily is limited, a too strong out-of-band blocking signal would saturate the receiver if it was not attenuated. Thus a purpose of the SAW filters is to attenuate the strong blocking signal so that the sensitivity requirements of the receiver can be fulfilled while saturation of the receiver is prevented.

However, as mentioned these SAW filters cannot be integrated on the RF-ASIC. In addition they increase the area consumption and the cost of the receiver considerably, and they require several components including low noise amplifiers to be duplicated for each frequency band. Therefore, the complexity of the receiver could be reduced considerably if these SAW filters could be removed.

GB 2 342 520 suggests a homodyne receiver that does not require SAW filters and can be implemented in ASIC. In this receiver unwanted products from the output of the down conversion mixer are filtered out by high pass filters, restored to the radio frequency by up conversion, phase shifted and then added in anti-phase to the input of the down conversion mixer in order to cancel the unwanted products and linearize the mixer. Although this solution does avoid the SAW filters, it is still quite complex due to the use of an extra up conversion mixer and a phase shifter.

Therefore, it is an object of the invention to provide a method of receiving modulated radio signals in which the use of SAW filters can be avoided and the complexity of the receiving circuitry, and thus the cost of the receiver, can be reduced, while strong out-of-band blocking signals can still be handled without saturation of the receiver.

### Summary

According to the invention the object is achieved in that the method comprises the step of detecting a signal level of said signal at a point upstream of said filter; and attenuating, if said detected signal level indicates that the signal received at the input terminal exceeds a preset level, the signal input to at least one of said low noise amplifier and said mixer to prevent saturation of at least one of said low noise amplifier and said mixer.

When the received signal is attenuated in dependence of a detected signal level, strong out-of-band blocking signals can be handled with components, i.e. attenuators and a detector that can easily be integrated on an ASIC together with the other components of the receiver. Further, since narrow banded band pass filters are no longer used, frequency bands close to each other, such as the DCS 1800 and PCS 1900 bands, can now be processed in the same channel, which means that the number of low noise amplifiers can be reduced and less complex antenna switches can be used. Thus smaller and cheaper receivers are achieved, which can still fulfil the required specifications.

The step of attenuating may comprise attenuating the signal input to the low noise amplifier, wherein said preset level is selected to prevent saturation of the low noise amplifier and the mixer. This allows a simple receiver with few components to be implemented, and attenuation of the signal input to the low noise amplifier ensures that saturation of all components of the receiver can be prevented. Alternatively, the step of attenuating may comprise attenuating the signal input to the mixer, wherein said preset level is selected to prevent saturation of the mixer.

In a different embodiment, the step of attenuating comprises attenuating the signal input to the low noise amplifier, if said detected signal level indicates that the signal received at the input terminal exceeds a first preset level selected to prevent saturation of the low noise amplifier, and attenuating the signal input to the mixer, if said detected signal level indicates that the signal received at the input terminal exceeds a second preset level selected to prevent saturation of the mixer. By distributing the attenuation inside the receiver it is ensured that the performance, such as the noise figure, can be optimized according to the level of a blocking signal.

The method may further comprise the step of controlling a baseband amplifier arranged downstream of said filter and having an adjustable gain in dependence of said detected signal level to compensate for the attenuation of the signal. In this way the overall gain of the receiver can be kept constant independently of a blocking signal level.

In one embodiment, the receiver is a homodyne receiver, and said filtering is a low pass filtering. Alternatively, the receiver may be a low intermediate frequency receiver and said filtering a band pass filtering.

As mentioned, the invention further relates to a receiver for receiving modulated radio signals in at least one frequency band, said receiver comprising an input terminal, a low noise amplifier, a mixer and a filter arranged such that a signal received at an input terminal can be amplified in the low noise amplifier, down-converted in the mixer and then filtered in the filter to reduce signals outside said at least one frequency band. When the receiver further comprises a detector for detecting a signal level of said signal at a point upstream of said filter and at least one attenuator for attenuating, if said detected signal level indicates that the signal received at the input terminal exceeds a preset level, the signal input to at least one of said low noise amplifier and said mixer to prevent saturation of at least one of said low noise amplifier and said mixer, a receiver is achieved in which the use of SAW filters is avoided and the complexity of the receiving circuitry, and thus the cost of the receiver, can be reduced, while strong out-of-band blocking signals can still be handled without saturation of the receiver.

The at least one attenuator may be arranged to attenuate the signal input to the low noise amplifier, and said preset level selected to prevent saturation of the low noise amplifier and the mixer. This allows a simple receiver with few components to be implemented, and attenuation of the signal input to the low noise amplifier ensures that saturation of all components of the receiver can be prevented. Alternatively the at least one attenuator may be arranged to attenuate the signal input to the mixer, and said preset level selected to prevent saturation of the mixer.

In a different embodiment, a first attenuator is arranged to attenuate the signal input to the low noise amplifier, if said detected signal level indicates that the signal received at the input terminal exceeds a first preset level selected to prevent saturation of the low noise amplifier, and a second attenuator is arranged to attenuate the signal input to the mixer, if said detected signal level indicates that the signal received at the input terminal exceeds a second preset level selected to prevent saturation of the mixer. By distributing the attenuation inside the receiver it is ensured that the performance, such as the noise figure, can be optimized according to the level of a blocking signal.

The receiver may further comprise a baseband amplifier arranged downstream of said filter and having an adjustable gain that can be controlled from said detector to compensate for the attenuation of the signal in said at least one attenuator. In this way the overall gain of the receiver can be kept constant independently of a blocking signal level.

In one embodiment, the receiver is a homodyne receiver, and said filter is a low pass filter. Alternatively, the receiver is a low intermediate frequency receiver, and said filter is a band pass filter.

For example, the at least one attenuator may be integrated on an Application Specific Integrated Circuit together with other components of the receiver.

The receiver may for example be adapted to receive signals modulated according to the Global System for Mobile Communications or signals modulated according to a Wideband Code Division Multiple Access system.

### Brief Description of the Drawings

The invention will now be described more fully below with reference to the drawings, in which
figure 1 shows an example of a prior art GSM radio transceiver,
figure 2 shows the receiver part of the transceiver of figure 1 for one frequency band,
figure 3 shows an embodiment of a receiver with two controlled receivers,
figure 4 shows a modified version of the receiver of figure 3,
figure 5 shows a further modified version of the receiver of figure 3,
figure 6 shows a first embodiment of a receiver with one controlled receiver,
figure 7 shows a modified version of the receiver of figure 6,
figure 8 shows a further modified version of the receiver of figure 6, and
figure 9 shows a second embodiment of a receiver with one controlled receiver.

### Detailed Description of Embodiments

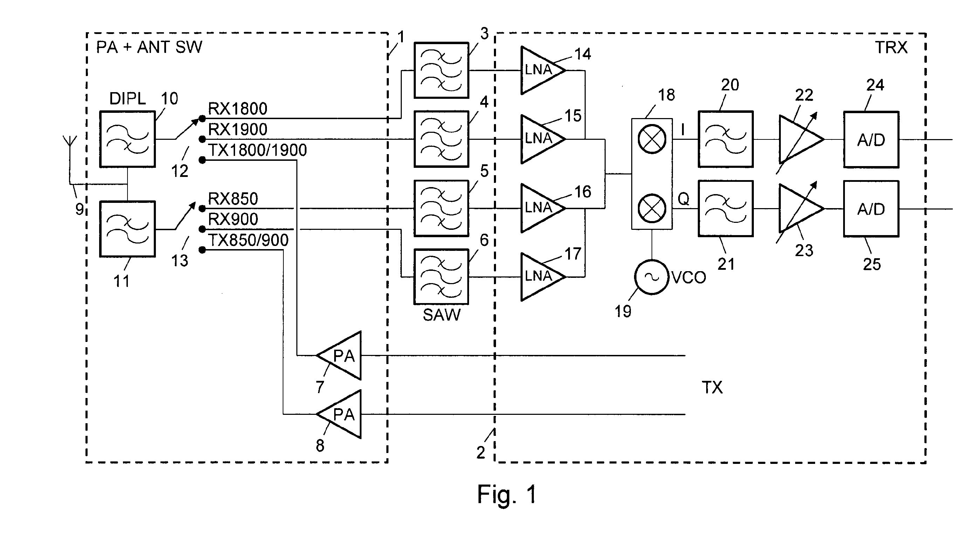

A block diagram of a prior art quad-band radio transceiver for use in a Global System for Mobile Communications (GSM) network is shown in figure 1. The transceiver is adapted to transmit and receive the four GSM bands GSM 850, GSM 900, DCS 1800 and PCS 1900. The GSM transceiver is only used as an example, and transceivers for other frequency bands could be used as well. The shown transceiver comprises a power amplifier and antenna switch module 1, four SAW filters 3-6 and a transmitter/receiver module 2, which could typically be implemented as an Application Specific Integrated Circuit (ASIC). Since the present invention relates to the receiver part of the transceiver, the transmitter part is only illustrated by the two power amplifiers 7, 8. The shown receiver is a zero intermediate frequency receiver, which is also known as a homodyne or direct conversion receiver.

Radio signals are received at the antenna 9 and fed to a diplexer comprising a high pass filter 10 and a low pass filter 11. The high pass filter 10 selects the two higher frequency bands DCS 1800 and PCS 1900, while the low pass filter 11 selects the two lower frequency bands GSM 850 and GSM 900. The antenna switches 12 and 13 then select the one frequency band to be received or transmitted, although in the transmission direction the two lower and the two higher bands, respectively, can be combined. The received frequency band is fed through one of the SAW filters 3-6 to one of the low noise amplifiers 14-17. The purpose of the SAW filters is to attenuate high level out-of-band blocking signals in order to avoid saturation or compression in the low noise amplifiers and the subsequent circuits. The low noise amplifiers 14-17 are normally optimized for low noise performance and high gain to suppress the noise of the successive stages.

The outputs of the low noise amplifiers 14-16 are fed to a mixer 18, which is normally a Gilbert mixer and is used to translate the information to the baseband frequency by mixing the received signal with the output of a local oscillator 19. The two outputs from the mixer 18 are an in-phase component (I) and a quadrature component (Q), and they are low pass filtered in the filters 20 and 21 before they are further processed in the usual baseband processing stages, which are here indicated by the amplifiers 22 and 23 and the analog-to-digital converters 24 and 25. The baseband circuitry is used to amplify the signal of interest to a level suitable to the detector and to suppress unwanted signals. It is noted that in a practical implementation the circuit is more complex than illustrated in figure 1. Thus the signals from the SAW filters 3-6 and through the low noise amplifiers 14-17 and the mixer 18 are typically differential, and several discrete components are needed around the SAW filters 3-6.

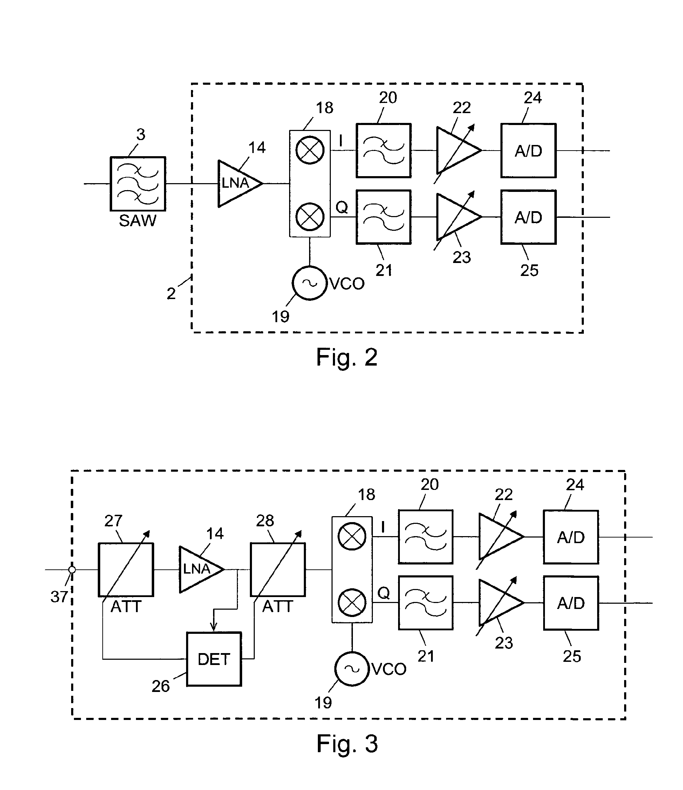

For simplicity figure 2 shows the SAW filter 3 and the receiver part of the RF-ASIC module 2 for one of the frequency bands (DCS 1800).

In the design of such a receiver, there are a number of tradeoffs between linearity, noise performance and power consumption. According to the GSM/EDGE Technical Specification 3GPP TS 45.005 "Radio transmission and reception" the sensitivity of the receiver shall be less than a reference sensitivity level that is specified to -102 dBm. During the presence of an out-of-band blocking signal, which can have a level of 0 dBm at the antenna input, a sensitivity of -99 dBm is allowed. However, phone manufacturers and system operators typically want a better sensitivity than the -102 dBm in order to be able to have margins in antenna design and overall system link budget. Typically a reference sensitivity of approximately -110 dBm is requested. The theoretical sensitivity limit for a Gaussian Minimum Shift Keying (GMSK) receiver is -116.2 dBm. The loss in the circuitry arranged in front of the RF-ASIC 2 is typically 3-4 dB, of which 2-3 dB relates to the SAW filter. The noise figure of the radio ASIC 2 is 2-3 dB, and the detector is approximately 1 dB worse than the ideal value. Thus a realistic sensitivity using this configuration is -108 to -110 dBm.

As mentioned, the SAW filters are used to attenuate high level (i.e. up to 0 dBm) out-of-band blocking signals so that saturation or compression of the low noise amplifiers and the subsequent circuits is avoided. However, the SAW filters and the relating discrete components in combination with the need of a separate low noise amplifier for each frequency band increase the area consumption and the cost of the receiver considerably. Thus the complexity of the receiver could be reduced considerably if these SAW filters could be removed.

However, removing the SAW filters means that the linearity requirements of the radio ASIC are tightened considerably. The attenuation of the SAW filter is typically in the order of 20 dB, and thus the linearity of the receiver has to improve accordingly. The overall sensitivity of the receiver should not be degraded when the SAW filters are removed, but the saved loss of SAW filters, i.e. 2-3 dB, can be taken into account, and thus the noise figure of the radio ASIC can be degraded from the 2-3 dB to 4-5 dB. Since the maximum allowed level of an input signal at the antenna is 0 dBm and there is a 1.5 dB loss before the RF ASIC module, the corresponding maximum input level to the RF ASIC is -1.5 dBm. With a margin of 0.5 dB, the compression point for the receiver should be -1 dBm. Thus a requirement of the receiver is a compression point of -1 dBm and a noise figure of 4-5 dB. Until now no solution seems to have been able to fulfil the noise requirement and the linearity requirement simultaneously.

Below the performance of the main components of the RF-ASIC module 2 of figure 2, i.e. the low noise amplifier 14, the mixer 18 and the baseband circuitry 20-25, are studied in more detail.

Several different topologies can be used for the low noise amplifier 14, but typically an input impedance of 50 Ohm can be assumed. A 0 dBm input signal then corresponds to an input voltage of Veff = 220 mV. In principle, the amplifier could be designed with this value (0 dBm) as the compression point, i.e. the point where the amplifier saturates and the gain begins to drop. The compression point can be defined as the point where the gain has dropped 1 dB, also called the 1 dB compression point or CP1. However, having a compression point at this high level would limit the gain since the supply voltage is limiting the collector swing. A more reasonable and typical compression point is -6 dBm, which would allow a voltage gain of 16 dB and a noise figure of 1.5 dB without too much effort. Thus this value of the compression point is used in the following.

The mixer 18 can be optimized for linearity without considering the noise too much, since the gain of the low noise amplifier will suppress most of the noise. If it is again assumed that the receiver is able to handle an input voltage of Veff = 0.22 V (0 dBm), the low noise amplifier gain of 16 dB means that the compression point (CP1) of the mixer (and thus of the receiver on the RF-ASIC) referred to the input of the receiver will be -16 dBm.

Finally the baseband circuitry is considered. Because of the low pass filter at the mixer output an out-of-band blocking signal will be attenuated a lot, and thus the compression point of the baseband circuitry is not relevant. However, the baseband circuitry will contribute to the noise figure. It can be assumed that the combined noise figure of the mixer and the baseband circuitry will be 10 dB.

Summing up these contributions, the RF-ASIC receiver has a compression point (CP1) referred to the input of -16 dBm and a noise figure of 2.2 dB. Regarding the noise figure of 2.2 dB, it is noted that noise figures (in dB) are calculated by calculating noise ratios (dimensionless) according to a formula known as the Friis formula. When, as in this case, there are two blocks, the noise ratio is NR = NR1 + (NR2 -1)/G1, where all values are in power ratios, and G1 is the gain of the first stage. Here NR = 1.41 + 9/40, which is approximately equal to 1.64. Thus the noise figure is NF = 10 log NR = 2.14 dB or approximately 2.2 dB. This formula also illustrates the importance of having a high gain and a low noise in the first stage, i.e. the low noise amplifier. The compression point of -16 dBm is sufficient to ensure that an out-of-band blocking signal of 0 dBm does not saturate the receiver, since it is attenuated approximately 20 dB in the SAW filter.

If the SAW filter is removed, the input loss, i.e. the loss in the circuitry arranged in front of the RF-ASIC will still be in the order of 1.5 dB due to the switch, matching and track losses in the printed circuit board. Since the noise figure of the RF-ASIC is 2.2 dB and the detector still contributes with 1 dB, the receiver without the SAW filter will have a sensitivity of -116.2 + 1.5 + 2.2 + 1 = -111.5 dBm and a compression point of -16 + 1.5 = -14.5 dBm referred to the antenna connector. As it can be seen, the sensitivity is very good, but the compression point is not sufficient to handle a blocking signal of 0 dBm.

To overcome this problem, a power detector and one or more controlled attenuators may be inserted in the circuit. These components can easily be integrated together with the other components on the radio ASIC. One of the ideas behind the invention is that a 0 dBm blocking signal actually occurs very rarely, and when it occurs the sensitivity may, as mentioned before, be degraded to -99 dBm according to the specification. Thus the suggested solution has an improved sensitivity (-111.5 dBm) under normal conditions, while it is degraded, but still within the specification, during the rare occurrences of a 0 dBm blocking signal. By detecting when a strong blocking signal occurs inside the radio ASIC, one or more attenuators can be controlled to make sure that the receiver is in its linear range, while the noise requirement is barely fulfilled. As shown below, the attenuation may be distributed inside the radio ASIC to make sure that the noise figure is optimized according to the blocking level.

An embodiment with two controlled attenuators is shown in figure 3. A power detector 26 detects the level of the output signal from the low noise amplifier 14, and the two attenuators 27 and 28 are controlled in dependence of the detected signal. Attenuator 27 is placed between an input terminal 37 and the low noise amplifier 14, while attenuator 28 is placed between the low noise amplifier 14 and the mixer 18. Under normal reception conditions the received input signal is well below the compression points of the receiver components, and the receiver has the performance mentioned above. However, when the input signal is close to or above a preset level corresponding to the compression point of the successive blocks, which will typically be due to the presence of an out-of-band blocking signal, the attenuators are activated. Attenuator 28 is activated first and then attenuator 27, as will be explained further below.

When the input signal level to the RF-ASIC reaches approximately -17 dBm, i.e. just below the -16 dBm compression point of the mixer 18, the output signal from the low noise amplifier 14 will have a level of approximately -1 dBm due to the low noise amplifier gain of 16 dB. This is detected by the detector 26, and attenuator 28 is activated, so that if the input signal level continues to increase, the input to the mixer 18 is maintained at this level, and saturation of the mixer 18 is avoided. Attenuator 28 has a range of 10 dB corresponding to the difference between the compression point of the low noise amplifier 14 and that of the mixer 18, and in this range it is controlled linearly by the blocking signal level as detected by the detector 26. Thus when the input signal level to the RF-ASIC reaches approximately -7 dBm, attenuator 28 will attenuate the signal 10 dB. The noise figure of the RF-ASIC is now degraded to 5.7 dB, which means that the sensitivity has dropped to -116.2 + 1.5 + 5.7 + 1 = -108 dBm, which is still a good value according to the requirements of the specification.

When the input signal level to the RF-ASIC reaches the approximately -7 dBm, i.e. just below the -6 dBm compression point of the low noise amplifier 14, attenuator 27 arranged before the low noise amplifier 14 is activated so that also saturation of the low noise amplifier is prevented. Since attenuator 27 is placed before the power detector the regulation will be somewhat more complex. By having a gain of approximately 10, the signal can be attenuated 5 dB while the input signal to the detector increases by 0.5 dB. With a 0 dBm blocking signal the compression point will now be approximately 0 dBm at the antenna, and the sensitivity will be -103 dBm, which means that there is still some margin to the -99 dBm required by the GSM specification. This margin can be used for compensating for component spread and reciprocal mixing of local oscillator noise.

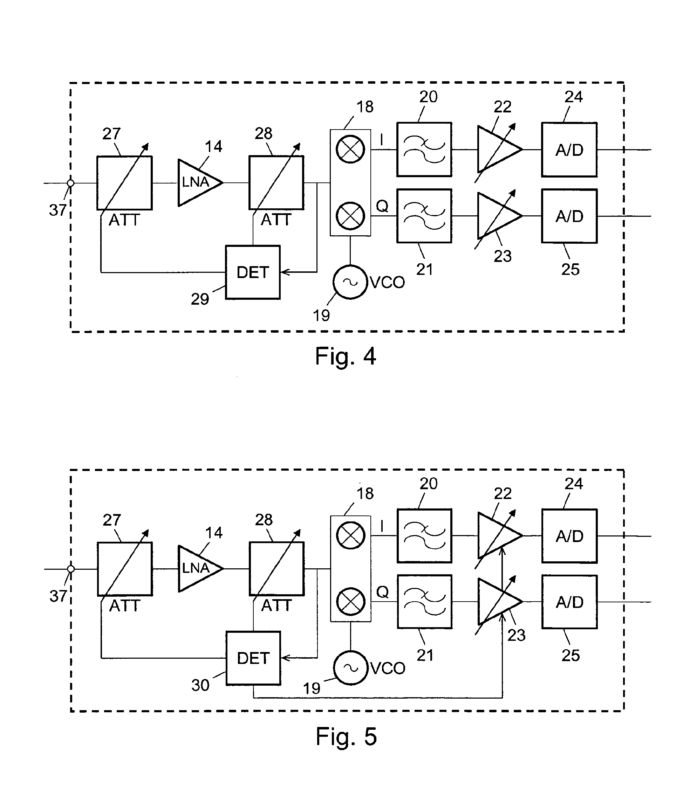

In figure 3 the input of the detector 26 is connected to the output of the low noise amplifier 14, i.e. before attenuator 28. However, as shown in figure 4 it can also be connected to the output of attenuator 28. The detector 29 is similar to the detector 26 of figure 3 with the only difference that the attenuation of attenuator 28 has to be taken into account when calculating the control signal for the attenuators. Similarly, the detector input could also be connected to other points of the receiver circuit, such as the input or the output of attenuator 27. However, the signal should be detected before it reaches the low pass filters 20 and 21, i.e. at a point upstream of these filters, because otherwise the strong blocking signal would not be detected.

Figure 5 shows a receiver similar to the receiver of figure 4, but with a modification introduced in the baseband circuitry. As shown the detector 30 has an additional output connected to the amplifiers 22 and 23. In this way the gain in the baseband circuit can be increased simultaneously with the attenuation in the attenuators 27 and 28, and thus the overall gain in the receiver is kept constant, and the only change that can be seen at the output is an increased noise floor.

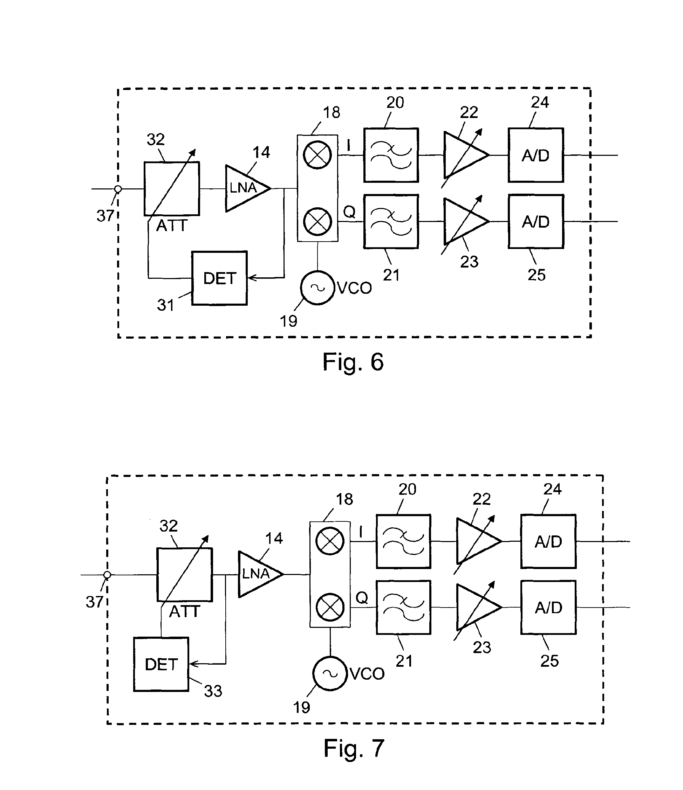

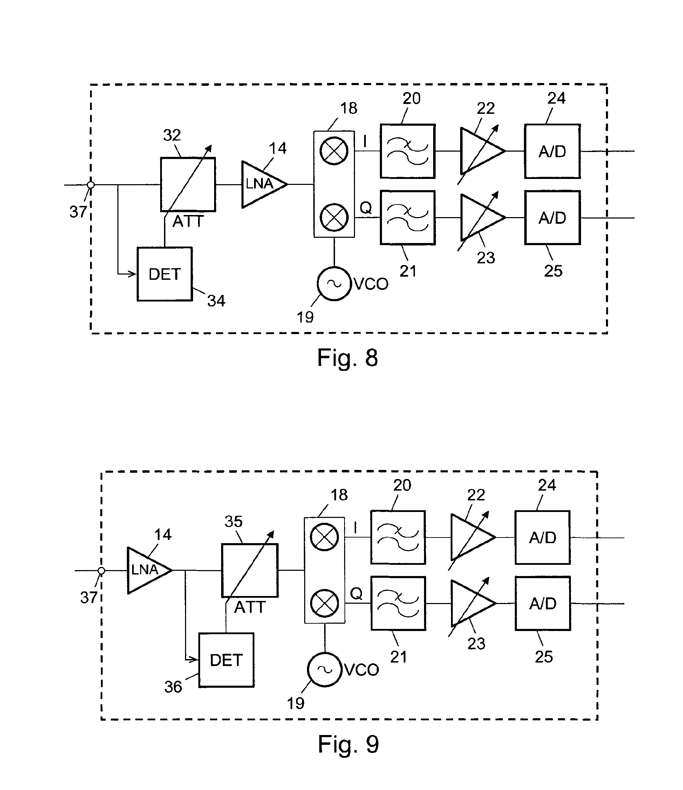

In the embodiments described above, two controlled attenuators are used. However, simpler embodiments using only one attenuator are also possible. An example of a receiver with one attenuator 32 is shown in figure 6. The detector 31 detects the level of the output signal from the low noise amplifier 14, and the attenuator 32, which is placed between the input terminal 37 and the low noise amplifier 14, is controlled in dependence of the detected signal. As shown in figures 7 and 8 the level of the input signal to the low noise amplifier 14 or the level of the input signal to the attenuator 32 may just as well be detected instead. Thus the detector 33 in figure 7 detects the level of the input signal to the low noise amplifier 14, while the detector 34 in figure 8 detects the level of the input signal to the attenuator 32. Alternatively, the signal level may also be detected at the I and Q outputs of the mixer 18. However, the signal level must be detected before the low pass filters 20 and 21, because otherwise an unwanted out-of-band blocking signal could not be detected since it is more or less filtered out by these filters. The characteristics and the circuitry of the detector, i.e. one of the detectors 31, 33 or 34, are of course different depending on where the signal level is detected, but in all cases the characteristics of the detector can easily be adapted.

When the input signal level to the RF-ASIC reaches approximately -17 dBm, i.e. just below the -16 dBm compression point of the mixer 18, provided the same specifications for the low noise amplifier 14 and the mixer 18 as those mentioned above are used, this will be detected by the detector, i.e. one of the detectors 31, 33 or 34 depending on the embodiment, and attenuator 32 is activated, so that the input to the low noise amplifier 14, and thus the input to the mixer 18, does not increase further, even if the input signal level to the RF-ASIC continues to increase. Attenuator 32 should then have a range of at least 17 dB so that the input to the low noise amplifier 14, and thus the input to the mixer 18, is maintained at this level, even if the input signal level to the RF-ASIC increases to 0 dBm due to an out-of-band blocking signal. In this way the signal levels are kept below the compression points of both the low noise amplifier 14 and the mixer 18, and thus saturation of these components is prevented.

Another example of a receiver with one attenuator is shown in figure 9. Here the attenuator 35 is placed between the low noise amplifier 14 and the mixer 18. In the figure the detector 36 detects the level of the output signal from the low noise amplifier 14, but as in the embodiments described above, the detector could just as well detect the level of the input signal to the low noise amplifier 14, the input signal to the mixer 18 or the levels of the I and Q outputs of the mixer 18. The attenuator 35 prevents saturation of the mixer 18 in the same way as it was described above, but in this embodiment the attenuator is not able to prevent saturation of the low noise amplifier 14, since it is placed after the low noise amplifier, and therefore the low noise amplifier should be designed with a higher compression point so that it can handle the strong out-of-band blocking signal without saturating.

The receiver described above is a zero intermediate frequency receiver, which is also known as a homodyne or direct conversion receiver. However, the same idea can also be used in a low intermediate frequency receiver, in which the received radio frequency signals are down-converted in the mixer to a very low intermediate frequency, e.g. 100 kHz. The circuits will be similar to those shown above for the zero intermediate frequency receiver, except that the low pass filters 20 and 21 are replaced with band pass filters adjusted to the low intermediate frequency.

Another benefit of removing the SAW filters as described above is that since they are (and must be) quite narrow banded, a separate SAW filter, and thus a separate branch including low noise amplifier, has to be used in the prior art for each of the four frequency bands described above and shown in figure
1. In the suggested solution, however, each low noise amplifier can easily handle at least the two adjacent bands, i.e. GSM 850 and GSM 900 or DCS 1800 and PCS 1900, respectively, and maybe even all four bands. Thus the number of branches in the receiver can be reduced considerably, and at the same time the antenna switches and the diplexer can be simplified with the result that the size as well as the cost of the receiver can be reduced accordingly. In the case where all four bands can be handled a single low noise amplifier, there need only be one receiver branch, and the diplexer may be removed.

Although GSM receivers are used as examples above, the suggested solution can just as well be used in receivers for other frequency bands, e.g. receivers for use in CDMA or WCDMA systems.

Although a preferred embodiment of the present invention has been described and shown, the invention is not restricted to it and may also be embodied in other ways within the scope of the subject-matter defined in the following claims.

## Claims

1. A method of receiving modulated radio signals in at least one frequency band in a receiver, wherein a signal received at an input terminal (37) of said receiver is amplified in a low noise amplifier (14), down-converted in a mixer (18) and then filtered in a filter (20; 21) to reduce signals outside said at least one frequency band,
**characterized in that** the method comprises the step of:
• detecting a signal level of said signal at a point upstream of said filter (20; 21); and
• attenuating, if said detected signal level indicates that the signal received at the input terminal (37) exceeds a preset level, the signal input to at least one of said low noise amplifier (14) and said mixer (18) to prevent saturation of at least one of said low noise amplifier (14) and said mixer (18).

2. A method according to claim 1, **characterized in that** the step of attenuating comprises attenuating the signal input to the low noise amplifier (14), wherein said preset level is selected to prevent saturation of the low noise amplifier (14) and the mixer (18).

3. A method according to claim 1, **characterized in that** the step of attenuating comprises attenuating the signal input to the mixer (18), wherein said preset level is selected to prevent saturation of the mixer (18).

4. A method according to claim 1, **characterized in that** the step of attenuating comprises attenuating the signal input to the low noise amplifier (14), if said detected signal level indicates that the signal received at the input terminal (37) exceeds a first preset level selected to prevent saturation of the low noise amplifier (14), and attenuating the signal input to the mixer (18), if said detected signal level indicates that the signal received at the input terminal (37) exceeds a second preset level selected to prevent saturation of the mixer (18).

5. A method according to any one of claims 1 to 4, **characterized in that** the method further comprises the step of controlling a baseband amplifier (22; 23) arranged downstream of said filter (20; 21) and having an adjustable gain in dependence of said detected signal level to compensate for the attenuation of the signal.

6. A method according to any one of claims 1 to 5, **characterized in that** the receiver is a homodyne receiver, and that said filtering is a low pass filtering.

7. A method according to any one of claims 1 to 5, **characterized in that** the receiver is a low intermediate frequency receiver, and that said filtering is a band pass filtering.

8. A receiver for receiving modulated radio signals in at least one frequency band, said receiver comprising an input terminal (37), a low noise amplifier (14), a mixer (18) and a filter (20; 21) arranged such that a signal received at the input terminal (37) can be amplified in the low noise amplifier (14), down-converted in the mixer (18) and then filtered in the filter (20; 21) to reduce signals outside said at least one frequency band,
**characterized in that** the receiver further comprises:
• a detector (26; 29; 30; 31; 33; 34; 36) for detecting a signal level of said signal at a point upstream of said filter (20; 21); and
• at least one attenuator (27, 28; 32; 35) for attenuating, if said detected signal level indicates that the signal received at the input terminal (37) exceeds a preset level, the signal input to at least one of said low noise amplifier (14) and said mixer (18) to prevent saturation of at least one of said low noise amplifier (14) and said mixer (18).

9. A receiver according to claim 8, **characterized in that** said at least one attenuator (32) is arranged to attenuate the signal input to the low noise amplifier (14), and that said preset level is selected to prevent saturation of the low noise amplifier (14) and the mixer (18).

10. A receiver according to claim 8, **characterized in that** said at least one attenuator (35) is arranged to attenuate the signal input to the mixer (18), and that said preset level is selected to prevent saturation of the mixer (18).

11. A receiver according to claim 8, **characterized in that** a first attenuator (27) is arranged to attenuate the signal input to the low noise amplifier (14), if said detected signal level indicates that the signal received at the input terminal (37) exceeds a first preset level selected to prevent saturation of the low noise amplifier (14), and a second attenuator (28) is arranged to attenuate the signal input to the mixer (18), if said detected signal level indicates that the signal received at the input terminal (37) exceeds a second preset level selected to prevent saturation of the mixer (18).

12. A receiver according to any one of claims 8 to 11, **characterized in that** the receiver further comprises a baseband amplifier (22; 23) arranged downstream of said filter (20; 21) and having an adjustable gain that can be controlled from said detector (26; 29; 30; 31; 33; 34; 36) to compensate for the attenuation of the signal in said at least one attenuator (27, 28; 32; 35).

13. A receiver according to any one of claims 8 to 12, **characterized in that** the receiver is a homodyne receiver, and that said filter is a low pass filter (20; 21).

14. A receiver according to any one of claims 8 to 12, **characterized in that** the receiver is a low intermediate frequency receiver, and that said filter is a band pass filter.

15. A receiver according to any one of claims 8 to 14, **characterized in that** said at least one attenuator (27, 28; 32; 35) is integrated on an Application Specific Integrated Circuit together with other components of the receiver.

16. A receiver according to any one of claims 8 to 15, **characterized in that** the receiver is adapted to receive signals modulated according to the Global System for Mobile Communications.

17. A receiver according to any one of claims 8 to 15, **characterized in that** the receiver is adapted to receive signals modulated according to a Wideband Code Division Multiple Access system.
